# EUROPEAN PATENT APPLICATION

(11) **EP 0 616 409 A2**
(43) Date of publication of application: **21.09.1994**
(21) Application number: 94301838.2
(22) Date of filing: 15.03.1994
(51) Int. Cl.: H02J 7/00

(54) **Portable electrical power supply**

(30) Priority: 17.03.1993 GB 9305446
(71) Applicant: PORTABLE POWER SYSTEMS LIMITED, London N10 1PS (GB)
(72) Inventor: Herbert, Raymond F, York Y06 7RE (GB)
(74) Representative: Mohun, Stephen John

(57) **Abstract**

A portable power supply is shown generally at 10. The power supply comprises a sealed rechargeable lead acid battery 11 to which is connected a charging circuit 12 for charging the battery 11.

A switching unit 13 controls the switching of power from the battery 11 either to accessory sockets 14 or to power output leads represented by 15.

Between the switching unit 13 and the power output leads 15 are a reverse-polarity protection circuit 16, a vehicle-start test/timer unit 17 and a stand by/monitor circuit 18, the operation of all of which will be described below.

The power supply apparatus 10 is primarily for use in the supply of 12 V dc electrical power at locations remote from conventional electricity supplies. The battery 11, at the heart of the apparatus, can be recharged from either a domestic mains electricity supply, using an integral mains charger unit 19, or from a 12-18 V dc source, such as a vehicle cigar lighter socket, a photovoltaic solar cell array, a wind-driven generator etc. using an integral 12 V dc charger lead 20.

## Description

The present invention relates to a portable electrical power supply apparatus and to a method of supplying electrical power.

According to a first aspect of the present invention, there is provided portable apparatus for the supply of electrical power, the apparatus comprising rechargeable energy storage means arranged, in use, to store electrical energy, output means arranged, in use, to provide an output for electrical power from the storage means and charging means arranged, in use, to charge the storage means with electrical energy from an external source.

In a preferred arrangement the apparatus comprises a housing.

Preferably the storage means comprises at least one battery.

In a preferred arrangement, the charging means comprises an electrical charging circuit arranged, in use, to recharge the or each battery from an external source of electrical power.

The unit may be arranged to supply direct current electrical power. Alternatively or additionally, the apparatus may be arranged to supply alternating current electrical power.

The charging means may be arranged in use to recharge the or each battery from an external source of alternating current electrical power.

Preferably the charging means is arranged, in use, to recharge the or each battery from an external source of mains electrical power.

Alternatively or additionally, the charging means may be arranged in use to recharge the or each battery from an external source of direct current electrical power.

Preferably the charging means is arranged in use to recharge the or each battery from a direct current power source of a vehicle.

The apparatus preferably comprises a first monitor means arranged in use to monitor an external power supply. In a preferred arrangement, the apparatus is arranged in use to supply electrical power automatically to an external appliance according to the monitored condition of the external power supply.

The apparatus may be arranged in use to supply electrical power to an external appliance automatically, according to a condition of an external power supply to an external appliance, which condition is detected by the first monitor means.

The apparatus may comprise a second monitor means arranged, in use, to monitor a condition of an external appliance. Preferably, the apparatus is arranged in use to supply electrical power to an external appliance according to the monitored condition of the appliance, which condition is detected by the second monitoring means.

The first and second monitor means may comprise a common monitor means.

Preferably the apparatus comprises connection means for connection with an external battery. The connection means may comprise electrically conductive cables.

In a preferred arrangement, the apparatus comprises means to recharge a battery of a vehicle to which it is connected.

Alternatively or additionally, the apparatus may be arranged to supply electrical power to assist in the starting of a vehicle engine. Preferably, the apparatus is arranged in use to recharge to a predetermined extent a vehicle battery to which it is connected and to supply electrical power directly from its own battery for supplementing the vehicle battery during starting of the vehicle engine.

In a preferred arrangement the housing comprises a case. The case may comprise a closure member which is moveable between a first open position in which a user may gain access to one or more controls of the apparatus and a second closed position, in which the user may not so gain access.

The case may comprise a transparent window portion for enabling a user to see one or more controls of the apparatus.

In a preferred arrangement, the closure member comprises the transparent portion.

The case may be provided with at least one carrying handle.

Preferably the case comprises a bag.

According to a second aspect of the present invention, there is provided a method of starting an engine using a portable power supply apparatus, the method including electrically connecting the apparatus to terminals of a battery of the engine, supplying a charging current from a storage means of the apparatus to the battery of the engine to a predetermined extent, and subsequently switching on a starter motor of the engine whilst the apparatus is still electrically connected to the battery of the engine.

The method may comprise starting the engine using a portable power supply apparatus according to any statement herein.

According to a third aspect of the present invention, there is provided a method of supplying electrical power to an electrical appliance from portable supply apparatus, the method including supplying power from a rechargeable storage means to at least one output means, which output means is connected to the appliance.

Preferably the method includes recharging the storage means from either a mains electricity source or from a direct current power source.

The method may include supplying electrical power using apparatus according to any statement herein.

The invention may be carried into practice in various ways, but an embodiment will now be described by way of example with reference to the accompanying diagrammatic drawings in which:
Figure 1 shows schematically a portable power supply apparatus according to one embodiment of the present invention, and
Figure 2 shows a carrying case for the apparatus of Figure 1.

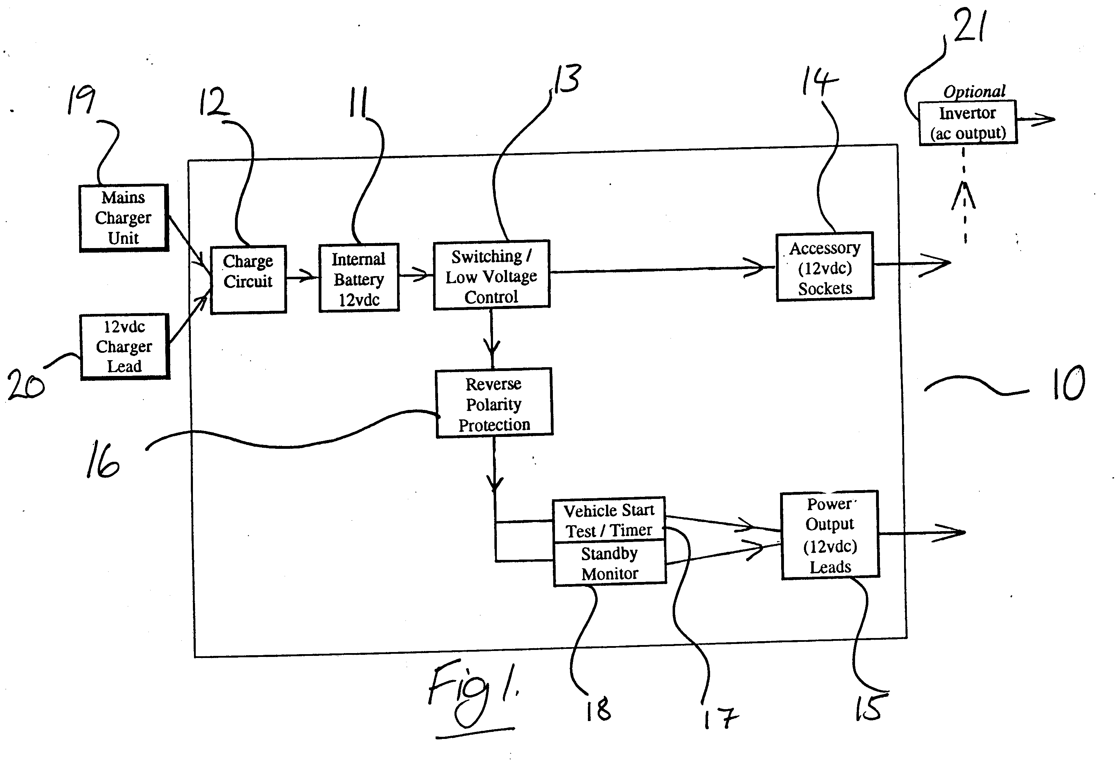

Referring to Figure 1, a portable power supply is shown generally at 10. The power supply comprises a sealed rechargeable lead acid battery 11 to which is connected a charging circuit 12 for charging the battery 11.

A switching unit 13 controls the switching of power from the battery 11 either to accessory sockets 14 or to power output leads represented by 15.

Between the switching unit 13 and the power output leads 15 are a reverse-polarity protection circuit 16, a vehicle-start test/timer unit 17 and a stand by/monitor circuit 18, the operation of all of which will be described below.

The power supply apparatus 10 is primarily for use in the supply of 12 V dc electrical power at locations remote from conventional electricity supplies. The battery 11, at the heart of the apparatus, can be recharged from either a domestic mains electricity supply, using an integral mains charger unit 19, or from a 12-18 V dc source, such as a vehicle cigar lighter socket, a photovoltaic solar cell array, a wind-driven generator etc. using an integral 12 V dc charger lead 20.

For example, the mains charger unit 19 which is permanently attached to the apparatus on a short lead, permits full recharging of the battery 11 from a conventional mains electricity supply in around 15 hours. Alternatively, the 12 V dc lead permits recharging of the battery 11 from a vehicle's cigar lighter socket during a short journey.

The 12 V dc accessory sockets 14 comprise conventional vehicle cigar-lighter sockets which are protected by a 30 amp fuse (not shown). If it is required to operate a 12 V applicance in this way, the switch 13 is made to connect the sockets 14 to the battery 11 and the appliance is connected using a conventional cigar lighter plug, which fits into one of the sockets 14.

An optional inverter device 21 may be employed to provide a 240 V ac supply. This is achieved by connecting two cigar lighter plugs (not shown) of the device 21 into the two sockets 14.

In addition to supplying power to a range of 12 V appliances and a range of 240 V ac appliances the apparatus can also be used to assist the starting of a vehicle engine (not shown).

To do this, the switch unit 13 is made to connect the battery 11 to the leads 15. The leads 15 are then connected to terminals on the vehicle battery (not shown) and, for a predetermined time interval, the vehicle battery is charged from the internal battery 11 of the apparatus. Once the time interval has elapsed, the test/timer unit 17 provides a visual indication on the exterior of the apparatus to confirm this and the vehicle may be started. The leads 15 are left connected to the terminals of the vehicle battery so that the charge on the vehicle battery can be supplemented by the charge on the internal battery 11.

The reverse polarity protection circuit 16 is arranged to disconnect the internal battery 11 in the event that the leads 15 are connected to the wrong terminals on the battery, thereby avoiding damage to either the internal battery 11 or the vehicle battery (not shown).

The stand by/monitor 18 is used to monitor the charge on an external battery, for example, a caravan battery, which is being used to provide power for one or more appliances. In the event that the charge on the external battery falls below a predetermined level, the stand by/monitor unit detects this and begins to charge the external battery from the internal battery 11, thereby maintaining the operation of the appliances.

Additionally, the stand by/monitor unit can monitor a mains supply and, in the event of mains failure, can enable the internal battery 11 to provide a back up power supply for an appliance connected by the sockets 14.

In more detail, the switching unit 13 comprises a 3-way mechanical switch, the three positions of which correspond to: (1) output via the sockets 14, (2) off position, (3) output via the leads 15. In addition, the switching unit 13 comprises an energise switch, which electrically connects the sockets 14 to the internal battery 11 via a low voltage control circuit.

The accessory sockets are protected by a 30 amp fuse and are intended to deliver the 12 V output to a range of optional 12 V plug-in low current accessories. The low voltage control circuit operates via a small relay (not shown), which disconnects the output in order to prevent the output voltage from falling below a certain value, as power is drained by the accessory.

This prevents the internal battery 11 from going into deep-discharge from which it would be unlikely to recover.

The heavy duty power leads 15 are used in the engine's start facility and are capable of delivering up to around 200 amps. No fuse protection is provided for this output, but protection is obtained by use of a large relay (not shown), which disconnects the output leads 15 when the voltage falls to below a predetermined value (as it would if the leads 15 were accidentally shorted together).

When the apparatus is connected to an external 12 V battery (for example a caravan battery), the apparatus continuously monitors the voltage of that battery, and if it should fall below a predetermined level (for example 10.5 V), the apparatus automatically closes the contacts of a large relay so connecting the apparatus' internal battery 11 to the caravan battery. This results in the caravan battery being boosted for a short period of time until its voltage is recovered, at which time the apparatus disconnects the internal battery 11 from the load. This operation is repeated for as long as electrical charge remains in the apparatus' internal battery 11. The net result is that the caravan owner, for example, can arrange 12 V accessories in the caravan for longer than the caravan battery would permit.

The charge circuit 12 comprises a full-wave bridge rectifier (the input of which is 16.5 V ac from the mains charger unit 19), a smoothing and filtering circuit, a voltage regulator and an output protection diode (the output is 14.5 V dc) to charge the internal 12 V battery 11.

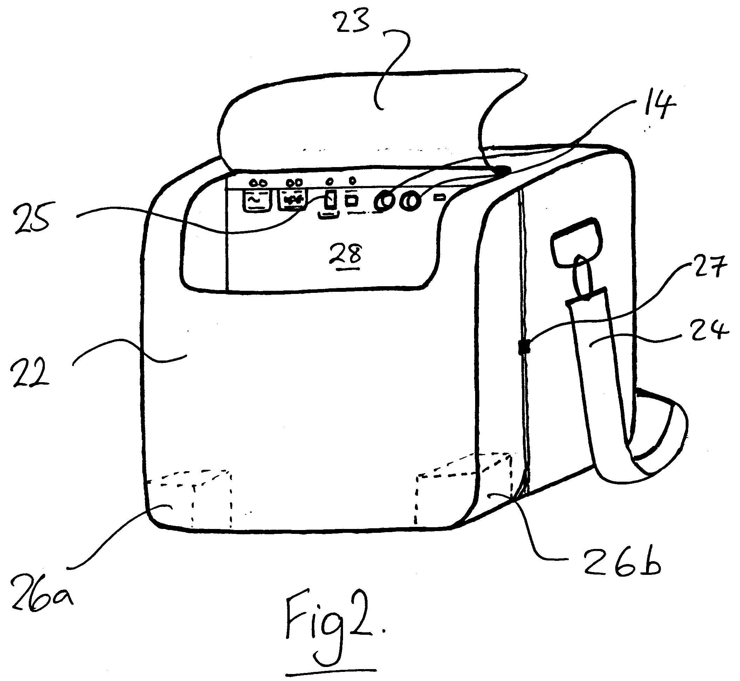

Referring to Figure 2, this shows a carrying case containing the apparatus of Figure 1. The case is in the form of a bag 22 having a zip-up flap 23 of transparent plastics material and a carrying strap 24 attached to each side of the bag 22 (only one attachment shown).

The transparent fold back flap 23 enables the user to see the controls without unzipping the flap 23. If, however, access to the controls is required, the flap 23 can be conveniently unzipped and folded back, for example to provide access to the accessory sockets 14 or to the three-position switch 25 of the switching unit 13 (see Figure 1).

The leads 15 (shown in Figure 1) are retained in internal compartments 26a and 26b, which are formed in cavities between an internal plastics box 28 in which the unit 10 is housed and the external canvas bag 22. Access to the leads 15 is obtained using a zipper 27, which extends around the side faces and bottom face of the bag 22.

The above-described invention provides a convenient fully portable and rechargeable power storage and supply unit. The canvas bag 22 is strong and weatherproof and is designed to be carried on the shoulder using the strap 24.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Portable apparatus for the supply of electrical power characterised in that the apparatus comprises rechargeable energy storage means arranged, in use, to store electrical energy, output means arranged, in use, to provide an output for electrical power from the storage means and charging means arranged in use to charge the storage means with electrical energy from an external source.

2. Apparatus according to Claim 1, wherein the apparatus comprises a housing.

3. Apparatus according to Claim 1 or Claim 2, wherein the storage means comprises at least one battery.

4. Apparatus according to any of Claims 1 to 3, wherein the charging means comprises an electrical charging circuit arranged, in use, to recharge the or each battery from an external source of electrical power.

5. Apparatus according to any of Claims 1 to 4, wherein the unit is arranged to supply direct current electrical power.

6. Apparatus according to any of Claims 1 to 5, wherein the apparatus is arranged to supply alternating current electrical power.

7. Apparatus according to any of Claims 1 to 6, wherein the charging means is arranged in use to recharge the or each battery from an external source of alternating current electrical power.

8. Apparatus according to any of Claims 1 to 7, wherein the charging means is arranged, in use, to recharge the or each battery from an external source of mains electrical power.

9. Apparatus according to any of Claims 1 to 8, wherein the charging means is arranged in use to recharge the or each battery from an external source of direct current electrical power.

10. Apparatus according to any of Claims 1 to 9, wherein the charging means is arranged in use to recharge the or each battery from a direct current power source of a vehicle.

11. Apparatus according to any of Claims 1 to 10, wherein the apparatus comprises a first monitor means arranged in use to monitor an external power supply.

12. Apparatus according to Claim 11, wherein the apparatus is arranged in use to supply electrical power automatically to an external appliance according to the monitored condition of the external power supply.

13. Apparatus according to Claim 11 or Claim 12, wherein the apparatus is arranged in use to supply electrical power to an external appliance automatically, according to a condition of an external power supply to an external appliance, which condition is detected by the first monitor means.

14. Apparatus according to any of Claims 1 to 13, wherein the apparatus comprises a second monitor means arranged in use to monitor a condition of an external appliance.

15. Apparatus according to Claim 14, wherein the apparatus is arranged in use to supply electrical power to an external appliance according to the monitored condition of the appliance, which condition is detected by the second monitor means.

16. Apparatus according to Claim 11 and Claim 14, wherein the first and second monitor means comprise a common monitor means.

17. Apparatus according to Claim 2, wherein the housing comprises a case.

18. Apparatus according to Claim 17, wherein the case comprises a closure member which is moveable between a first open position in which a user may gain access to one or more controls of the apparatus and a second closed position in which the user may not so gain access.

19. Apparatus according to Claim 17 or 18 wherein the case comprises a transparent window portion for enabling a user to see one or more controls of the apparatus.

20. Apparatus according to Claim 19, wherein the closure member comprises the transparent portion.

21. Apparatus according to any of Claims 17 to 20, wherein the case comprises a bag.

22. A method of starting an engine using a portable power supply apparatus, the method including electrically connecting the apparatus to terminals of a battery of the engine, supplying a charging current from a storage means of the apparatus to the battery of the engine to a predetermined extent, and subsequently switching on a starter motor of the engine whilst the apparatus is still electrically connected to the battery of the engine.

23. A method of supplying electrical power to an electrical appliance from portable supply apparatus, the method including supplying power from a rechargable storage means to at least one output means, which output means is connected to the appliance.
